Europäisches Patentamt

European Patent Office

Office européen des brevets

(19)

(11) EP 0 875 776 A2

(12) EUROPEAN PATENT APPLICATION

(43) Date of publication:
04.11.1998 Bulletin 1998/45

(51) Int Cl.⁶: **G02B 6/287**, G02B 6/124

(21) Application number: 98303056.0

(22) Date of filing: 21.04.1998

(84) Designated Contracting States:
**AT BE CH CY DE DK ES FI FR GB GR IE IT LI LU MC NL PT SE**
Designated Extension States:
**AL LT LV MK RO SI**

(30) Priority: 29.04.1997 US 841021

(71) Applicant: LUCENT TECHNOLOGIES INC.
Murray Hill, New Jersey 07974-0636 (US)

(72) Inventor: **Li, Yuan P.**
Duluth, Georgia 30155 (US)

(74) Representative:
**Watts, Christopher Malcolm Kelway, Dr. et al**
**Lucent Technologies (UK) Ltd,**
**5 Mornington Road**
**Woodford Green Essex, IG8 0TU (GB)**

(54) **Optical multiplexer having flat passbands**

(57) A wave division multiplexer (WDM) 500 includes a pair or star couplers 1, 2 that are interconnected by a grating 50 having a number of unequal-length waveguides. One group 501 of the unequal-length waveguides has lengths that differ from each other by multiples of a predetermined length ($\Delta l_1$), while another group 502 has lengths that differ from each other by multiples of a different predetermined length ($\Delta l_2$). In a preferred embodiment, the two groups of waveguides are interleaved, and the following equations apply:

$$l_i = l_o + i(\Delta l_1), \text{ for } i = \pm (1, 3, 5, ...)$$

$$l_i = l_o + i(\Delta l_2), \text{ for } i = \pm (2, 4, 6, ...)$$

where $l_o$ is the length of a central waveguide 51 in the grating. In another embodiment, the group 1 waveguides are positioned on one side of the central waveguide while the group 2 waveguides are positioned on the other side of the central waveguide. In this embodiment, the following equations apply:

$$l_i = l_o + i(\Delta l_1), \text{ for } i = 1, 2, 3, ...$$

$$l_i = l_o + i(\Delta l_2), \text{ for } i = -1, -2, -3, ...$$

In both embodiments, the passbands of the WDM are flatter than conventional Gaussian passbands associated with such devices.

FIG 6

## Description

### Technical Field

This invention relates to optical devices that perform multiplexing and/or demultiplexing functions and, more particularly, this invention relates to a waveguide grating router (WGR) having flat passbands.

### Background of the Invention

As optical communications advances, it has become a matter of great importance to transmit more and more individual channels of information on the same fiber, and to be able to separate individual channels from each other without interference to/from the other channels. In wavelength division multiplexing (WDM) systems, each channel operates at a different wavelength (color). And even though modulation of a single wavelength signal widens its spectrum, it still does not extend very far from its central wavelength. An optical WDM may be fabricated with a pair of star couplers that are interconnected by an optical grating (*i.e.*, an array of waveguides whose lengths differ from their nearest neighbors by predetermined amounts). Examples of such interconnected star couplers, also known as waveguide grating routers, are shown in U. S. Patents 5,002,350 and 5,136,671 and 5,412,744.

In one direction of transmission, the WDM operates as a multiplexer wherein a plurality of separate and distinct wavelengths ($\lambda_1$, $\lambda_2$, ... $\lambda_n$) are launched into different input ports of one star coupler and emerge on a single output port of the other star coupler. In the other direction of transmission, the WDM operates as a demultiplexer wherein a plurality of different wavelengths are launched into a single port of one star coupler and emerge on multiple ports of the other star coupler according to their particular wavelengths. Changing the input wavelength causes the output port to change. Accordingly, WDMs are often referred to wavelength routing devices, and the wavelength region (band) that is routed to/from a particular port is referred to as a channel. One desirable characteristic of the WDM is uniform transmission of all wavelengths across the band of each channel (*i.e.,* flat passbands). Another desirable characteristic of the WDM is that the flat portions of adjacent passbands are as wide as possible without encroaching on each other. These desirable characteristics can be conveniently quantified into a figure-of-merit ($B_1/B_2$) where $B_1$ is the bandwidth between the wavelengths where the channel gain has dropped by 1 dB from its maximum level, and $B_2$ is the bandwidth between the wavelengths where the channel gain has dropped by an additional 30 dB (*i.e.,* a total of 31 dB from its maximum level). An ideal figure-of-merit, equal to 1.0, would eliminate crosstalk between adjacent channels and provide maximum channel-packing density.

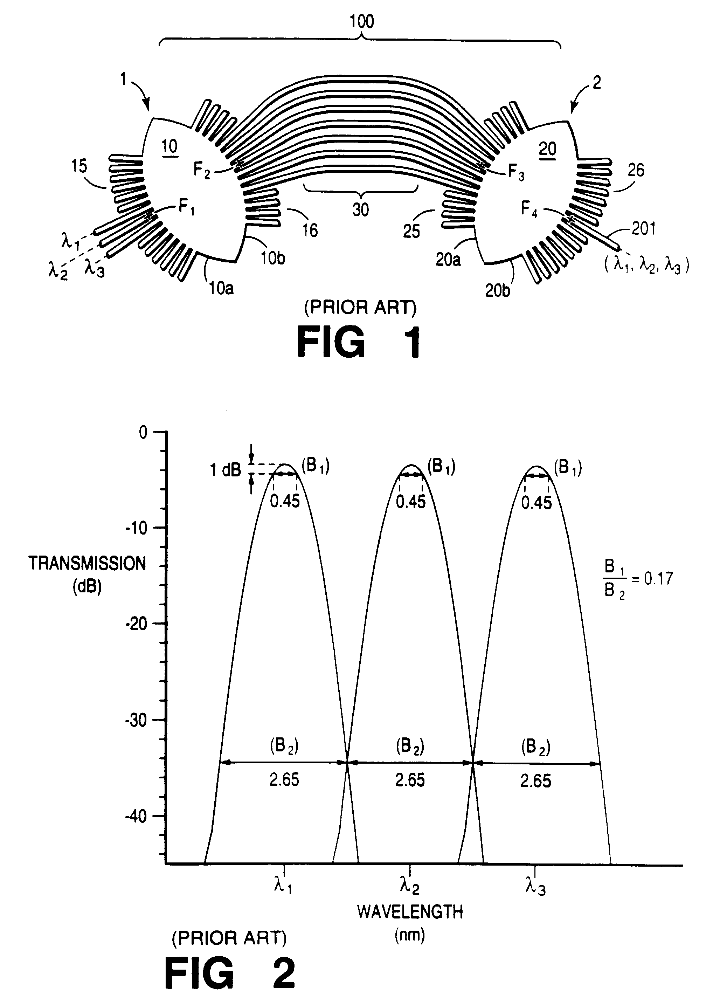

The WDM of FIG. 1 corresponds to the one disclosed in U. S. Patent 5,136,671 (the '671 patent). The transmission characteristics of three channels are illustrated in FIG. 2 and have Gaussian shapes. It is noted that the $B_1/B_2 = 0.17$. However, because multiple routing devices are cascaded in large optical networks, the overall transmission characteristic of each particular channel is narrowed - a phenomenon that can be readily understood by recognizing that cascading these passive routing devices is equivalent to multiplying their individual transmission characteristics. For example, assuming that the transmission characteristic of a particular channel, of a routing device has a magnitude of 1.0 at the center of the channel and 0.8 near its edges, then the transmission characteristic of that particular channel through two routing devices is still 1.0 at the center but is now 0.8 x 0.8 = 0.64 near its edges - a substantial narrowing.

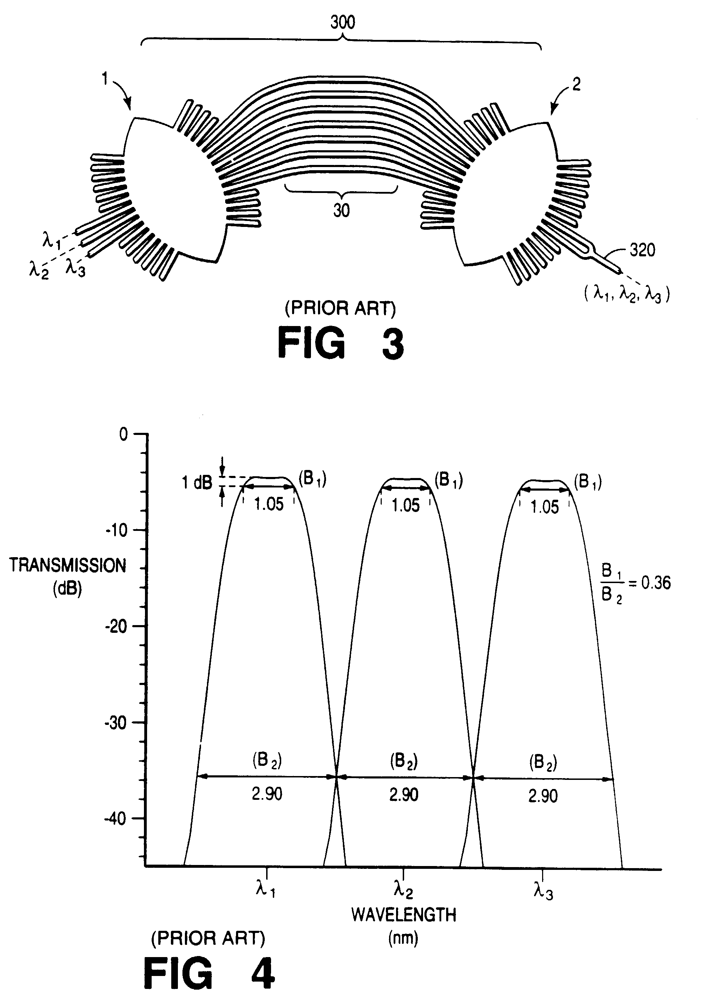

The WDM of FIG. 3 corresponds to the one disclosed in U. S. Patent 5,412,744 (the '744 patent). The transmission characteristics of three particular channels are illustrated in FIG. 4 where it is noted that the figure-of-merit $B_1/B_2$ for this design is equal to 0.36, which represents a substantial improvement. An even greater improvement is shown in US-A-5 706 577 .

However, these improved designs all require the use of Y-branch splitters at the input and/or output of the star couplers, and this leads to: (i) increased chip size; (ii) passband asymmetry caused by unequal power splitting in each Y-branch; and (iii) junction loss in each Y-branch.

Flatter passbands have been achieved without the use of Y-branch splitters by using input and output star couplers designed with two focal points. Such a WDM device has been reported in the Technical Digest of the 1997 Optical Fiber Conference at pages 302-303 by D. Trouchet et al. However, such WDMs require precision manufacturing, and this may lead to wide variations of the transmission characteristics among the WDMs.

What is sought after, but does not appear to be disclosed in the prior art, is a WDM having passbands that are flatter than Gaussian passbands, but which avoids the use of Y-branch splitters and has minimum susceptibility to manufacturing variations.

### Summary of the Invention

A wave division multiplexer includes a pair or star couplers that are interconnected by a grating that comprises an array of unequal-length waveguides. By selecting the lengths of the grating's waveguides in a novel manner, the passbands of the WDM are made flatter than conventional Gaussian passbands associated with such devices. The waveguides are grouped according to length ($l_i$) into at least two groups. The first group has lengths that differ from each other by multiples of a first constant length $(\Delta l_1)$; whereas the second group of waveguides has lengths that differ from each other by multiples of a second constant length $(\Delta l_2)$; where $\Delta l_1 \neq$

$\Delta l_2$.

In a preferred embodiment of the invention, the two groups of waveguides are interleaved. In this situation, the following equations apply:

$$(\text{group 1}) \Rightarrow l_i = l_o + i(\Delta l_1), \text{ for } i = \pm (1, 3, 5, ...)$$

$$(\text{group 2}) \Rightarrow l_i = l_o + i(\Delta l_2), \text{ for } i = \pm (2, 4, 6, ...)$$

where $l_o$ is the length of a central waveguide in the grating.

In another embodiment of the invention, the group 1 waveguides are positioned on one side of the central waveguide while the group 2 waveguides are positioned on the other side of the central waveguide. In this embodiment, the following equations apply:

$$(\text{group 1}) \Rightarrow l_i = l_o + i(\Delta l_1), \text{ for } i = 1, 2, 3, ...$$

$$(\text{group 2}) \Rightarrow l_i = l_o + i(\Delta l_2), \text{ for } i = -1, -2, -3, ...$$

## Brief Description of the Drawing

The invention and its mode of operation will be more clearly understood from the following detailed description when read with the appended drawing in which:

FIG. 1 is a prior art optical multiplexer having individual input ports and individual output ports;
FIG. 2 shows the transmission characteristics for three adjacent channels of the optical multiplexer disclosed in FIG. 1;
FIG. 3 is a prior art optical multiplexer having individual input ports and a Y-branch output port;
FIG. 4 shows the transmission characteristics for three adjacent channels of the multiplexing and demultiplexing apparatus disclosed in FIG. 3;
FIG. 5 discloses an optical multiplexer having flat passbands in accordance with the present invention;
FIG. 6 discloses the lengths of the waveguides that form the grating in a preferred embodiment of the optical multiplexer of FIG. 5;
FIG. 7 discloses the lengths of the waveguides that form the grating in a second embodiment of the optical multiplexer of FIG. 5;
FIG. 8 illustrates the periodic nature of a waveguide grating router, such as an optical multiplexer, showing its free spectral range;
FIG. 9A shows the transmission characteristic of the optical multiplexer disclosed in FIG. 5 that is attributable to the first group of waveguides in the grating;
FIG. 9B shows the transmission characteristic of the optical multiplexer disclosed in FIG. 5 that is attributable to the second group of waveguides in the grating; and
FIG. 9C shows the composite transmission characteristic of the optical multiplexer disclosed in FIG. 5.

## Detailed Description

FIG. 1 discloses a prior-art optical multiplexer/demultiplexer 100, which is described in U. S. Patent 5,136,671. Briefly, optical multiplexer/demultiplexer 100 comprises a pair of star couplers 1, 2 that are interconnected by a grating 30 that is made from a number of unequal-length optical waveguides. An N x N star coupler couples the lightwave from any input to all of the outputs without wavelength selectivity. It is widely used as a basic cross-connect element in passive optical networks. Ideally, the optical power from any input splits evenly into all the outputs without power loss, so that each output receives 1/N of the input power. Star coupler 1 comprises a dielectric slab 10 which comprises a free-space region having two curved, preferably circular, boundaries 10a and 10b. Power transfer in star coupler 1, between input array 15 and output array 16, is accomplished through radiation in the dielectric slab 10.

FIG. 1 shows an array 15 of input waveguides radially directed from input ports toward a focal point F2. Each of the input waveguides is connected to the free-space region 10 in a substantially uniform fashion along boundary 10a. An array 16 of output waveguides is radially directed toward a focal point F1. Each of the waveguides in the array 16 is also connected to the free-space region 10 in a substantially uniform fashion along boundary 10b. The length of each waveguide in the grating 30 differs from the lengths of all the other waveguides in the grating so that predetermined and different phase shifts are applied to optical signals propagating through the waveguides of the grating from the star coupler 1 because of the different path lengths over which the signals in the grating must travel to reach the output of the grating. Accordingly, the optical signals emanating from each of the waveguides of grating 30 have different phases, which are functions of the lengths of the waveguides.

The waveguides of grating 30 are connected to another array 25 of waveguides which are radially directed toward a focal point F4. The array 25 connects the output of the grating 30 to the input of the second star coupler 2. Like star coupler 1, star coupler 2 comprises a slab of dielectric material 20 forming a free-space region having two curved, preferably circular, boundaries 20a and 20b. The array 25 of input waveguides is connected to the free-space region in a substantially uniform distribution along boundary 20a. An array 26 of output waveguides are radially directed from output ports toward a focal point F3. The waveguides of array 26 are also connected to the free-space region 20 in a substantially uniform distribution along the boundary 20b.

Device 100 combines individual channels, which are illustratively present on each of three waveguides of array 15, onto a single waveguide in the array 26. In this direction of transmission, multiplexing is achieved. The center frequencies of these three channels are designated $\lambda_1$, $\lambda_2$, and $\lambda_3$ in FIG. 1. For such multiplexing to occur, $\lambda_1$, $\lambda_2$, $\lambda_3$ and the various path lengths of grating 30 must be carefully selected. And since device 100 is bi-directional, demultiplexing occurs in the opposite direction. For example, if array 26 is now used as the input array, then device 100 will operate to route channels, which are all present on a single waveguide 201 of array 26, onto different waveguides of array 15 according to their wavelengths. The transmission loss of each channel (in either direction) is shown in FIG. 2.

FIG. 2 discloses the transmission characteristic for multiplexer/demultiplexer 100 (shown in FIG. 1) for three adjacent channels. For the purpose of illustration, the nominal wavelength of the center channel $\lambda_2$ is about 1550 nanometers (where 1 nanometer = 1 nm = a billionth of a meter). It is desirable to have a constant gain across the entire channel, and for the transmission characteristic of each channel to decrease sharply at its edges so that signal energy from one channel will not spread into adjacent channels, and so that the signals within each channel are not distorted by variations in the transmission characteristic of the channel. As discussed above, these desirable characteristics can be conveniently quantified into a figure-of-merit $(B_1/B_2)$ where $B_1$ is the bandwidth between the wavelengths where the channel gain has dropped by 1 dB from its maximum level (illustratively 0.45 nm), and $B_2$ is the bandwidth between the wavelengths where the channel gain has dropped by an additional 30 dB (illustratively, 2.65 nm). Each channel shown in FIG. 2 has a Gaussian shape; accordingly, multiplexer/demultiplexer 100 has a figure-of-merit $(B_1/B_2)$ equal to 0.17.

FIG. 3 discloses another prior-art optical multiplexer/demultiplexer 300 of the type shown and described in the '744 patent. It is similar to optical multiplexer/demultiplexer 100 shown in FIG. 1, except that it includes a Y-branch splitter 320 connected to the ends of a pair of adjacent waveguides at the output of star coupler 2. In multiplexer/demultiplexer 300, each channel has an intrinsic loss of about 5 dB. And while such a loss is undesirable, the associated figure of merit $(B_1/B_2)$ is now equal to 0.36 as indicated in FIG. 4, and this represents a substantial improvement over the design shown in FIG. 1. The spacing between adjacent channels is illustratively $B_2$, which is about 2.90 nm for the design shown in FIG. 3.

*Planar Waveguide Construction*

The present invention relates to planar waveguides whose construction is generally understood and described in numerous articles and patents. The most advanced and technically developed planar waveguides are doped-silica waveguides fabricated with silicon optical bench (SiOB) technology. A doped-silica waveguide is usually preferred because it has a number of attractive properties including low cost, low insertion loss, low birefringence, stability, and compatibility for coupling to fiber. Further, the processing steps are compatible with those in silicon integrated circuit (IC) technology, which are geared for mass production and are readily known.

Generally, a doped-silica waveguide is formed by initially depositing a base or lower cladding layer of low index silica on a silicon or silica substrate. A layer of doped silica with a high refractive index, *i. e.,* the core layer, is then deposited on top of the lower cladding layer. The core layer is subsequently patterned or sculpted into structures required by the optical circuits using photo-lithographic techniques similar to those used in integrated circuit fabrication. Lastly, a top cladding layer is deposited to cover the patterned waveguide core. This technology is generally described in an article entitled: *Silica-based optical integrated circuits* by Y. P. Li and C. H. Henry at Vol. 143, No. 5, IEE Proceedings on Optoelectronics, pages 263-280 (October 1996), which is hereby incorporated by reference.

Quite surprisingly, it has recently been learned that flat passbands can be achieved by judiciously selecting the lengths of the waveguides within the grating between star couplers of a WDM. In the conventional WDM shown in FIG. 3, an ordered array of unequal-length waveguides 30 interconnect a pair of star couplers 1, 2. These lengths vary according to the equation:

$$l_i = l_o + i(\Delta l); \text{ for } i = \pm (1, 2, 3, ...)$$

where, $l_i$ is the length of the $i^{th}$ waveguide in the grating;

$l_o$ is the length of a central waveguide in the grating; and

$\Delta l$ is a predetermined constant length However, by specifying the lengths of the waveguides in a different manner, it is possible to create channels having a flatter gain characteristic than conventional Gaussian channels. In particular, the waveguides of the present invention are grouped according to length $(l_i)$ into at least two groups. The first group has lengths that differ from each other by multiples of a first predetermined length $(\Delta l_1)$; whereas the second group of waveguides has lengths that differ from each other by multiples of a second predetermined length $(\Delta l_2)$; where $\Delta l_1 \neq \Delta l_2$.

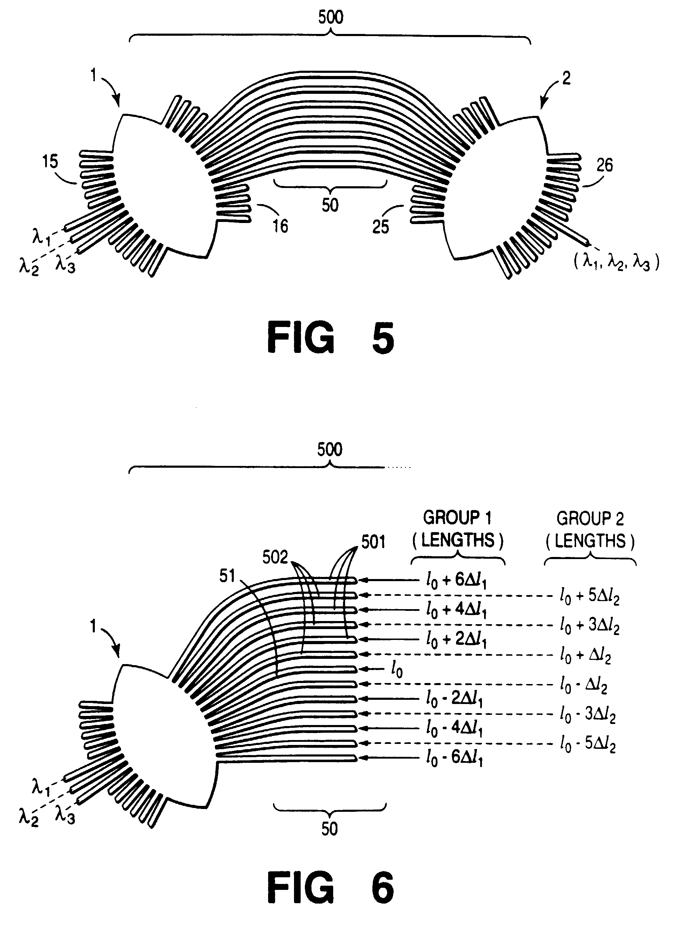

FIG. 5 discloses an optical multiplexer 500, according to the invention, having a plurality of unequal-length waveguides 50 that interconnect a pair of star couplers 1, 2. The optical multiplexer 500 is generally similar to the optical multiplexer shown in FIG. 1 and described in U.S. Patent 5,136,671 which is hereby incorporated by reference for its detailed disclosure of such WDMs. However, waveguides 50 of the present invention have a different length arrangement than the waveguides 30 shown in prior-art FIG. 1. As illustrated in FIG. 6, the first group of waveguides 501 are interleaved with a second group of waveguides 502. The lengths of the waveguides are specified by the equations:

$$(group\ 1) \Rightarrow l_i = l_o + i(\Delta l_1),\ for\ i = \pm\ (1, 3, 5, ...)$$

$$(group\ 2) \Rightarrow l_i = l_o + i(\Delta l_2),\ for\ i = \pm\ (2, 4, 6, ...)$$

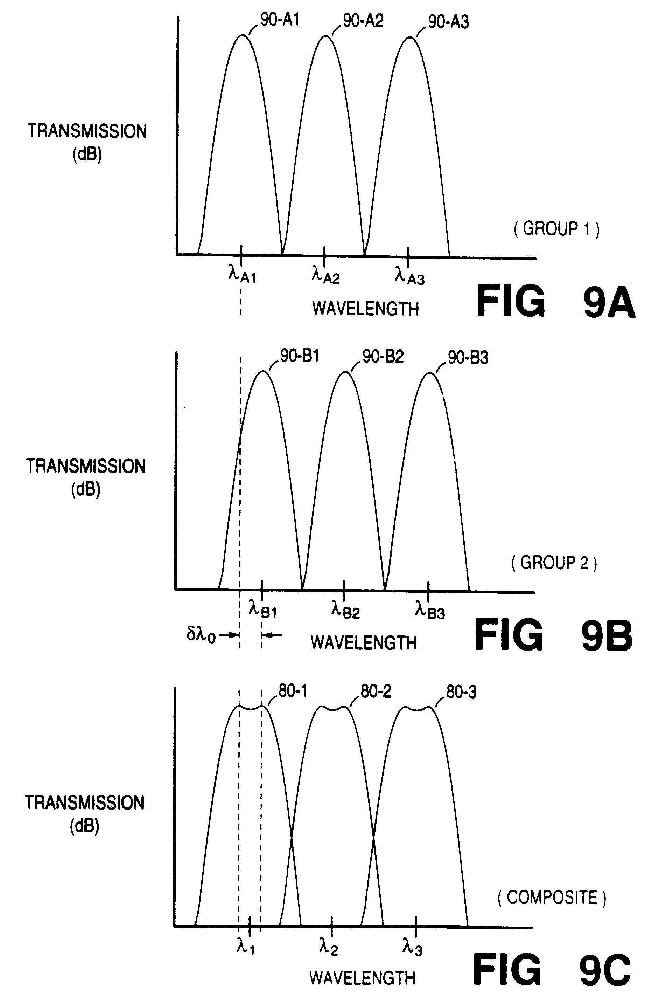

As shown in FIG. 6, waveguide 51 is a central waveguide in the grating 50 that has a length of $(l_o)$, but it is not necessarily associated with group 501 or group 502. The first group of waveguides 501 generates a transmission characteristic such as shown in FIG. 9A, while the second group of waveguides 502 generates a transmission characteristic such as shown in FIG. 9B. Note that the transmission characteristics of FIG. 9A and 9B are identical, but are shifted in wavelength by an amount $\delta\lambda_0$ which is discussed below. When these transmission characteristics are combined, an overall transmission characteristic, such as shown in FIG. 9C, is obtained. Accordingly, an optical multiplexer having flat passbands is constructed without the disadvantages associated with Y-branch splitters. Moreover, given the present state of SiOB technology and photolithography, it is easy to control the relative lengths of the waveguides that make up the grating 50 with great precision, so the resulting apparatus has minimal manufacturing variation. FIG. 6 represents a preferred embodiment of the invention because the group 1 and group 2 waveguides are symmetrically positioned across the entire grating 50. As shown, they are interleaved, one at a time, across the entire grating. Another technique (not shown) for symmetrically positioning the waveguides across the entire grating is to interleave the group 1 and group 2 waveguides, two at a time. Symmetrical positioning of these waveguides generates substantially identical transmission characteristics for each the groups as indicated in FIG. 9A and 9B. Nevertheless, the benefits of the present invention also accrue to non-symmetrical arrangements as discussed below.

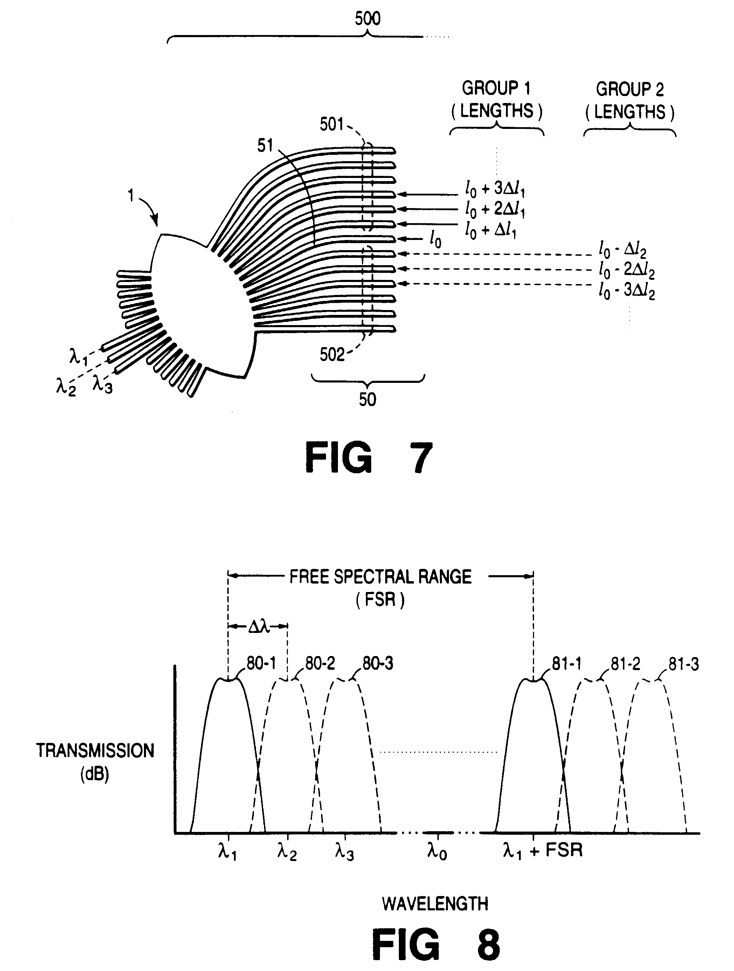

FIG. 7 illustrates another embodiment of an optical multiplexer 500 having flat passbands, according to the invention, in which the waveguides of the first group 501 are clustered together in one array, and the waveguides of the second group 502 are clustered together in another array. The lengths of the waveguides within grating 50 are specified by the equations:

$$(group\ 1) \Rightarrow l_i = l_o + i(\Delta l_1),\ for\ i = 1, 2, 3, ...$$

$$(group\ 2) \Rightarrow l_i = l_o + i(\Delta l_2),\ for\ i = -1, -2, -3, ...$$

Here, the groups are positioned on opposite sides of the central waveguide 51 of the grating 50, which causes the transmission characteristic of each group to be slightly different from the other. Nevertheless, the advantages of the present invention still accrue to this embodiment.

Specific parameters for the design of an optical multiplexer are based on the number of channels to be multiplexed, the channel wavelengths, the desired bandwidth of the various channels, and the properties of the materials used in the construction of the optical multiplexer. Reference is now made to FIG. 8 for a discussion of these considerations.

_Waveguide Grating Router_

FIG. 8 shows the overall transmission characteristic of a waveguide grating router (WGR), which is frequently used as an _M x N_ WDM as in the present invention. The principle of the WGR can be described as follows: the lightwave from an input waveguide couples into the grated waveguides by the input star coupler. If there were no differential phase shift in the grating region, the lightwave propagation in the output star would appear as if it were the reciprocal propagation in the input star. The input waveguide would thus be imaged at the interface between the output slab and the output waveguides. The imaged input waveguide would be butt-coupled to one of the output waveguides. The linear length difference in the waveguide grating results in a wavelength-dependent tilt of the wave front of the lightwave in the grating waveguides, and thus shifts the input waveguide image to a wavelength-dependent position. As the wavelength changes, the input waveguide image sweeps across and couples light into different output waveguides. For a more detailed discussion, reference is made to the aforementioned article entitled: _Silica-based optical integrated circuits at pages 274-276._

In particular, the periodic nature of optical gratings is noted, wherein the period of the grating is known as its "free spectral range" (FSR). In an eight (8) channel multiplexer, for example, there would be a total of 8 channels 80-1, 80-2, ... 80-8 before the spectrum of the channels repeats, due to the nature of such gratings, as channels 81-1, 81-2,... 81-8. And if each channel has 100 GHz bandwidth _(i.e.,_ 0.8 nm), then the required FSR would be 6.4 nm _(i.e.,_ 8 x 0.8 nm).

Reference is now made to FIG. 9A-9C, which visually illustrates the additive combination of Gaussian channels 90-A1, 90-A2 and 90-A3 with Gaussian channels 90-B1, 90-B2 and 90-B3, respectively, to form channels 80-1, 80-2 and 80-3, which have flatter passbands. In FIG. 9A, Gaussian channel 90-A1 represents the transmission characteristic associated with the group 1 waveguides in the preferred embodiment of FIG. 6, and is centered at wavelength $\lambda_{A1}$. In FIG. 9B, Gaussian channel 90-B1 is the transmission characteristic associated with the group 2 waveguides in the preferred embodiment of FIG. 6, and is centered at wavelength $\lambda_{B1}$. It has been determined that a suitably flat passband 80-1 can be achieved, as shown in FIG. 9C, when the central wavelengths $\lambda_{A1}$ and $\lambda_{B1}$ are separated by $\delta\lambda_0$. The separation between additively combined Gaussian passbands for achieving a maximally flat passband is discussed in greater detail in U. S. Patent 5, 412,744 which is hereby incorporated by reference.

The following equations are sufficient for the calculation of suitable lengths for $\Delta l_1$ and $\Delta l_2$:

$$\frac{\Delta l_1 + \Delta l_2}{2} = \frac{\lambda o^2}{n_g(FSR)}$$

$$\Delta l_2 - \Delta l_1 = \frac{\delta\lambda_o \cdot \lambda_o}{n_g(FSR)}$$

where:

FSR = free spectral range (e.g., 6.4 nm);
$\lambda_0$ = nominal center of the FSR (e.g., 1555 nm);
$n_g$ = effective refractive index of the waveguides (e.g., 1.45); and
$\delta\lambda_0$ = separation between the center wavelengths of the Gaussian channels that are additively combined to provide flat passbands (e.g., about 1/3 of the channel spacing or 0.266 nm).

Accordingly, for an 8-channel WDM system wherein each channel has a bandwidth of 100 GHz, the following illustrative lengths for $\Delta l_1$ and $\Delta l_2$ provide a WDM having passbands that are flatter than conventional Gaussian passbands associated with such devices: $\Delta l_1 = 260,577$ nm and $\Delta l_2 = 260,533$ nm.

Although various particular embodiments of the present invention have been shown and described, modifications are possible within the spirit and scope of the invention. These modifications include, but are not limited to, subdivision of a WDM grating into more than two groups of waveguides; the interleaving of waveguides among the groups in a manner other than alternating them one at a time; and the use of the present invention together with Y-branch splitters at the input to the first star coupler and/or the output of the second star coupler.

## Claims

1. An optical multiplexer (e.g., 500) comprising a pair or star couplers. (e.g., 1, 2) that are interconnected by a grating (e.g., 50), which includes at least two groups of unequal-length waveguides (e.g., 501, 502), characterized in that:

   the first group of waveguides (e.g., 501) has lengths that differ from each other by multiples of a first predetermined length ($\Delta l_1$); and
   the second group of waveguides (e.g., 502) has lengths that differ from each other by multiples of a second predetermined length ($\Delta l_2$), where $\Delta l_1 \neq \Delta l_2$.

2. The wave division multiplexer of claim 1, wherein substantially half of the waveguides of the first group are positioned on one side of a central waveguide (e.g., 51) of the grating, and wherein the other half of the waveguides of the first group are positioned on an other side of the central waveguide.

3. The wave division multiplexer of claim 2, wherein substantially half of the waveguides of the second group are positioned on one side of the central waveguide of the grating, and wherein the other half of the waveguides of the second group are positioned on the other side of the central waveguide.

4. The wave division multiplexer of claim 1, wherein the first and second groups of waveguides are interleaved with each other, and wherein the first and second groups have lengths ($l_i$) that are respectively specified by the equations:

   $$l_i = l_o + i(\Delta l_1), \text{ for } i = \pm (1, 3, 5, ...);$$

   and

   $$l_i = l_o + i(\Delta l_2), \text{ for } i = \pm (2, 4, 6, ...),$$

   where $l_o$ is the length of the central waveguide in the grating.

5. The wave division multiplexer of claim 1, wherein substantially all of the waveguides of the first group are positioned on one side of a central waveguide of the grating, and wherein substantially all of the waveguides of the second group are positioned on an other side of the central waveguide.

6. The wave division multiplexer of claim 5, wherein the waveguides of the first group are clustered together in one array and the waveguides of the second group are clustered together in another array, and wherein the lengths ($l_i$) of the first and second groups are respectively specified by the equations:

   $$l_i = l_o + i(\Delta l_1), \text{ for } i = 1, 2, 3, ... ;$$

   and

$$l_i = l_o + i(\Delta l_2), \text{ for } i = -1, -2, -3, \dots ,$$

where $l_o$ is the length of a central waveguide in the grating.

(PRIOR ART)

# FIG 1

(PRIOR ART)

# FIG 2

300

1

2

$\lambda_1$
$\lambda_2$ $\lambda_3$

30

320

$(\lambda_1, \lambda_2, \lambda_3)$

(PRIOR ART)
# FIG 3

TRANSMISSION
(dB)

0

-10

-20

-30

-40

1 dB

$(B_1)$
1.05

$(B_1)$
1.05

$(B_1)$
1.05

$\dfrac{B_1}{B_2} = 0.36$

$(B_2)$
2.90

$(B_2)$
2.90

$(B_2)$
2.90

$\lambda_1$

$\lambda_2$

$\lambda_3$

WAVELENGTH
(nm)

(PRIOR ART)
# FIG 4

FIG 5

FIG 6

500

GROUP 1
( LENGTHS )

GROUP 2
( LENGTHS )

501

51

1

$l_0 + 3\Delta l_1$
$l_0 + 2\Delta l_1$
$l_0 + \Delta l_1$
$l_0$

$l_0 - \Delta l_2$
$l_0 - 2\Delta l_2$
$l_0 - 3\Delta l_2$

$\lambda_1$
$\lambda_2$ $\lambda_3$

502

50

# FIG 7

FREE SPECTRAL RANGE
( FSR )

$\Delta\lambda$

80-1  80-2  80-3

81-1  81-2  81-3

TRANSMISSION
(dB)

$\lambda_1$     $\lambda_2$     $\lambda_3$     $\lambda_0$     $\lambda_1 + $ FSR

WAVELENGTH

# FIG 8

FIG 9A

FIG 9B

FIG 9C